# EUROPÄISCHE PATENTSCHRIFT

(11) **EP 0 905 190 B1**
(45) Veröffentlichungstag und Bekanntmachung des Hinweises auf die Patenterteilung: **27.04.2005**
(21) Anmeldenummer: 98118119.1
(22) Anmeldetag: 24.09.1998
(51) Int. Cl.: C08L 59/00, C08L 67/00, C08L 77/00

(54) **Thermoplastische Formmasse**
Thermoplastic moulding compositions
Compositions de moulage thermoplastiques

(30) Priorität: 29.09.1997 DE 19742884
(43) Veröffentlichungstag der Anmeldung: 31.03.1999
(73) Patentinhaber: Ticona GmbH, 65451 Kelsterbach (DE)
(72) Erfinder: Kurz, Klaus, Dr., 65451 Kelsterbach (DE); Schleith, Oskar, Dr., 65719 Hofheim (DE)

(56) Entgegenhaltungen:
- EP-A- 0 277 381
- EP-A- 0 552 520
- EP-A- 0 663 424
- WO-A-93/11206
- US-A- 4 713 408
- PATENT ABSTRACTS OF JAPAN vol. 007, no. 147 (C-173), 28. Juni 1983 & JP 58 059255 A (MITSUBISHI KASEI KOGYO KK), 8. April 1983
- PATENT ABSTRACTS OF JAPAN vol. 096, no. 009, 30. September 1996 & JP 08 134315 A (JAPAN SYNTHETIC RUBBER CO LTD), 28. Mai 1996

## Beschreibung

Die Erfindung betrifft eine thermoplastische Formmasse mit durch die Zugabe von oxidiertem Polyethylenwachs verbessertem Abriebverhalten und deren Verwendung.

Reibung und Verschleiß sind unvermeidliche Begleiterscheinungen von mechanischen Gleitvorgängen. Durch die Wahl geeigneter Werkstoffpaarungen können diese minimiert werden. Thermoplastische Formmassen, die als vielseitige Werkstoffe im technischen Bereich Anwendung finden, haben nicht immer die gewünschten tribologischen Eigenschaften, wie geringe Reibungszahl und geringen Verschleiß. Deshalb gibt man ihnen Additive zu, die das Gleit-Reib-Verhalten verbessern. Einige technische Thermoplaste verfügen bereits von Grund auf über ein gutes Gleit-Reib-Verhalten. Zu diesen zählen Polyester, Polyamide und Polyoxymethylene. Letztere zeichnen sich besonders durch eine hohe Kristallinität und lineare Polymerketten als besonders gleitfähiger Werkstoff aus. Zur weiteren Optimierung des Gleit-Reib-Verhaltens fügt man auch diesen Kunststoffen entsprechende Additive zu.

Es ist allgemein bekannt, daß durch Gleitmittelzusätze die tribologischen, d.h. Gleitund Reib-Eigenschaften von Thermoplasten verbessert werden können. So ist der Einsatz von polaren oxidierten und unpolaren Polyethylenwachsen als Gleitmittel bei polaren Kunststoffen wie Polyvinylchlorid (PVC) bekannt. Aus der Anwendung bei PVC läßt sich jedoch nicht auf die Einsatzmöglichkeit bei den technischen Kunststoffen wie POM, Polyester und Polyamid schließen. Als Beispiele für Gleitmittel in diesen Kunststoffen werden im allgemeinen nicht-oxidierte Polyethylenwachse, Silikonöle, Fettsäureester, Fettsäurediamide, Wachssäuren, Wachssäureester und Metallseifen sowie Kombinationen aus verschiedenen Gleitmitteln angeführt. Gleitmittel werden beschrieben in Gächter/Müller, "Taschenbuch der Kunststoff-Additive", 3. Ausgabe, Carl Hanser Verlag München/Wien 1994, Seite 478-504 worauf Bezug genommen wird.

EP-A-0 552 520 beschreibt Gegenstände hergestellt aus einer Mischung bestehend im wesentlichen aus Polyester, Na-Jon und insbesondere oxidiertem Polyethylen wachs zur Verbesserung des Gleitens.

Wenn auch durch Zugabe von Gleitmitteln im allgemeinen die Abriebfestigkeit verbessert werden kann, sinkt jedoch häufig die Reißdehnung an den meist unvermeidbaren Fließnähten stark ab.

Die Aufgabe der vorliegenden Erfindung bestand darin, die bekannten Nachteile zu vermeiden, das Reib- und Verschleißverhalten von Thermoplasten zu verbessern, ohne ihre mechanischen Eigenschaften, insbesondere die Fließnahtfestigkeit wesentlich zu reduzieren.

Gegenstand der Erfindung ist eine Formmasse bestehend aus 95 bis 99,9 Gewichtsteilen, bevorzugt 98 bis 99,5 Gewichtsteilen (A) mindestens eines Polyoxymethylens und 0,1 bis 5 Gewichtsteilen, bevorzugt 0,2 bis 2 Gewichtsteilen eines oxidierten Polyethylenwachses (B). Die Formmassenkönnen Zusatzstoffe und Verarbeitungshilfen (C) wie Stabilisatoren, Entformungshilfen und Pigmente aber auch Füll- und Verstärkungsstoffe, wie Glasfasern, Glaskugeln, Kreide, Talk, Zinkoxid, Wollastonit oder polymere Gleitstoffe, wie ultrahochmolekulares Polyethylen (PE-UHMW), Polytetrafluorethylen (PTFE) und Pfropf-Copolymer, welches ein Produkt einer Pfropfreaktion aus einem Olefin-Polymer und einem Acrylnitril/Styrol-Copolymer ist, oder Mischungen davon, in Mengen von 0 bis 50, vorzugweise 5 bis 30 Gewichtsteilen enthalten.

Die Komponenten (A) bis (C) ergänzen sich dabei stets zu 100 Gewichtsteilen.

Die Aufgabe der Erfindung konnte durch die Verwendung eines hochmolekularen Polyethylenwachses gelöst werden. Die Besonderheit dieses Produktes sind die mit Sauerstoff oberflächengebundenen, funktionellen Gruppen. Sie werden gezielt durch oxidative Nachbehandlung erzeugt.

Durch die oxidative Nachbehandlung des Polyethylenwachses wird die Affinität zum POM verbessert. Im Vergleich zu anderen Polyethylenwachsen fällt die Dehnung in der Fließnaht weniger stark ab und der Abrieb beim Gleitvorgang wird geringer.

Nur mit Gleitmitteln modifizierte Thermoplaste sind für Anwendungen mit speziellen Eigenschaftsprofilen, wie hohe Steifigkeit oder geringen Verzug überfordert. Höhere Steifigkeit und Festigkeit erhält man durch Zusatz von Verstärkungsstoffen, eine höhere Maßhaltigkeit durch Füllstoffe

Die geringen Gleitmittelzusätze, mit denen man bei unverstärkten Thermoplasten noch auskommt, reichen hier nicht mehr aus. Vorzugsweise gibt man zusätzlich zu diesen Mischungen noch polymere Gleitstoffe, deren Anteile im allgemeinen über 5 Gew.-Teilen liegen, um die tribologischen Anforderungen zu erfüllen.

Komponente (A) ist POM.

Bei den Polyoxymethylenen (POM), wie sie beispielsweise in der DE-A 29 47 490 beschrieben sind, handelt es sich im allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Äthern, cyclischen Acetalen und/oder linearen Polyacetalen.

Derartige POM-Homo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden solche POM-Copolymere als Komponente (A) bevorzugt, die neben den wiederkehrenden Einheiten -CH₂O- noch bis zu 50, vorzugsweise von 0,1 bis 20 und insbesondere 0,5 bis 10 mol-% an wiederkehrenden Einheiten 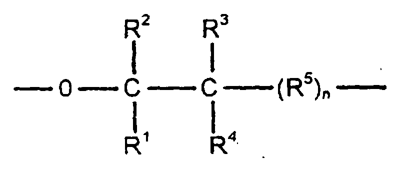 enthalten, wobei R¹ bis R⁴ unabhängig voneinander ein Wasserstoffatom, eine C₁bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 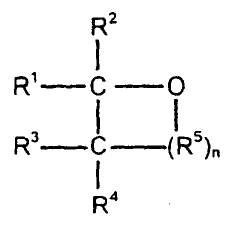 Wobei R¹ bis R⁵ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Besonders vorteilhaft sind Copolymere aus 99,5 - 95 Mol-% Trioxan und 0,5 bis 5 mol-% einer der vorgenannten Comonomere.

Als Komponente (A) ebenfalls geeignet sind Oxymethylenterpolymerisate, die beispielsweise durch Umsetzung von Trioxan, einem der vor stehend beschriebenen cyclischen Ether und mit einem dritten Monomeren, vorzugsweise einer bifunktionellen Verbindung der Formel 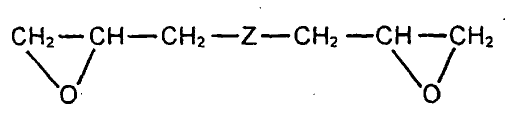 wobei Z eine chemische Bindung, -O- oder -ORO- (R=C₁- bis C₈-Alkylen oder C₂bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugten POM-Copolymere haben Schmelzpunkte von mindestens 150 °C und Molekulargewichte (Gewichtsmittelwert) M_{w} im Bereich von 5 000 bis 200 000, vorzugsweise von 7 000 bis 150 000. Endgruppenstabilisierte POM-Polymerisate, die an den Kettenenden C-C-Bindungen aufweisen, werden besonders bevorzugt.

Die eingesetzten POM-Polymere haben im allgemeinen einen Schmelzindex (MVR-Wert 190/2,16) von 2 bis 50 cm³/10 min (ISO 1133).

Das oxidierte Polyethylenwachs (B) ist ein hochmolekulares, polares Wachs und besitzt im allgemeinen eine Säurezahl von 12 bis 20 mg KOH/g und eine Viskosität von 3000 bis 5000 mPa·s.

Die Formmassen gemäß der Erfindung eignen sich besonders für Funktionsteile mit engen Passungen, d.h. für Teile, die beispielsweise zusammengesteckt fest aneinander haften aber dennoch leicht wieder voneinander zu lösen sind. Für solche Funktionsteile ist der niedrige Haftreibungskoeffizient der erfindungsgemäßen Formmasse von besonderem Vorteil. Die Formmassen eignen sich weiterhin für geformte Gleitkörper, die reibungsarm und verschleißfest sind, wie Zahnräder, Gleitlager, Reißverschlüsse, Gleitschienen, Gleitrollen, Kurven- und Nockenscheiben.

### Beispiele

Für die erfindungsgemäßen Beispiele 1, 2 und 3 sowie für die Vergleichsbeispiele I, II, III, IV und V wurde ein Copolymerisat aus Trioxan und Dioxolan mit einem Volumenschmelzindex MVR 190/2,16 von 8 cm³/10min verwendet. Das Copolymerisat wurde mit folgenden Gleitmitteln in verschiedenen Konzentrationen versetzt (Tabelle 1).

**Tabelle 1**

| Gleitmittel | Pulver [µm] | Tropfpunkt [°C] | Säurezahl [mg KOH/g] | Verseifungszahl [mg KOH/g] | Viskosität bei 140°C [mPa∗s] | Dichte [g/cm³] |
|---|---|---|---|---|---|---|
| Polyethylenwachs PE 130 * (Vergleich) | < 500 | 124 | 0 | 0 | 300 | 0,98 |
| Polyethylenwachs PED 191 * (erfindungsgemäß) | < 500 | 123 | 16 | 28 | 4000 | 0,98 |
| Stearylstearat (Vergleich) | -- | ca. 55 | -- | -- | -- | 0,83 |

| | | | | | | |
|---|---|---|---|---|---|---|
| * Hersteller: Clariant GmbH, Gersthofen, Bundesrepublik Deutschland | | | | | | |

Das POM-Copolymerisat wurde jeweils mit 0,3, 1,0 bzw. 2,0 Gewichtsteilen Polyethylenwachs bzw. 2,0 Gewichtsteilen Stearylstearat in einem schnellaufenden Fluidmischer, Diosna V 100 (Firma Dierks u. Söhne, Osnabrück, Bundesrepublik Deutschland) gemischt und in einem Doppelschneckenextruder ZE 25 x 33 D (Firma Berstorff, Hannover, Bundesrepublik Deutschland) bei einer Massetemperatur von 200°C aufgeschmolzen und anschließend granuliert.

Das Granulat wurde acht Stunden bei 120 °C getrocknet und anschließend zu Probekörpern für mechanische und tribologische Prüfungen gespritzt. Als Spritzgießmaschine diente der Typ KM 90/210 B (Firma Krauss Maffei, München, Bundesrepublik Deutschland). Die Verarbeitungsbedingungen wurden nach den Empfehlungen der ISO 9988-2, Stoff-Norm für POM, gewählt.

### Messungen:

Zugversuch nach ISO 527 Teil 1 und 2.

### Verschleißmessungen:

Der Abrieb wird auf einer Verschleißwelle - eine rotierende Welle, auf die zylindrische Probekörper mit 12 mm Durchmesser aus dem zu prüfenden Werkstoff gepreßt werden - gemessen. Das Verschleißvolumen wird in Abhängigkeit von der Zeit bestimmt. Das Testprinzip entspricht nach ISO/DIS 7148-2 dem "pin on ring" Prinzip.

| | |
|---|---|
| Werkstoff Welle | Stahl |
| Wellendurchmesser | 65 mm |
| Rauhtiefe Rz | ca. 2 µm |
| Belastung | 3,1 N |
| Gleitgeschwindigkeit | 136 m/min |
| Versuchsdauer | 60 h |

Tabelle 2 gibt die Ergebnisse aus den Verschleißmessungen und dem Zugversuch an.

**Tabelle 2**

| | 1 | 2 | 3 | I | II | III | IV | V |
|---|---|---|---|---|---|---|---|---|
| POM-Copolymer [Gew.-Teile] | 99,7 | 99,0 | 98,0 | 100 | 98 | 99,7 | 99,0 | 98,0 |
| Polyethylenwachs PE 130 [Gew.-Teile] | - | - | - | - | - | 0,3 | 1,0 | 2,0 |
| Polyethylenwachs PED 191 [Gew.-Teile] | 0,3 | 1,0 | 2,0 | - | - | - | - | - |
| Stearylstearat [Gew.-Teile] | - | - | - | - | 2,0 | - | - | - |
| Meßwerte | | | | | | | | |
| Verschleißvolumen [mm³] | 4,5 | 4,2 | 5,0 | 9,0 | 24,9 | 8,1 | 9,3 | 29,1 |
| Streckspannung [MPa] | 67,3 | 64,8 | 61,6 | 67,2 | 60,6 | 66,6 | 64,2 | 61,5 |
| Bruchdehnung ohne Fließnaht [%] | 17,9 | 22,3 | 23,7 | 15,3 | 20,6 | 16,2 | 22,5 | 24,0 |
| Bruchdehnung mit Fließnaht [%] | 15,1 | 11,1 | 6,9 | 14,1 | 7,0 | 10,7 | 9,4 | 7,1 |

Die Versuche zeigen deutlich, daß nur bei Verwendung des oxidierten Polyethylenwachses (PED 191) ein besonders geringes Verschleißvolumen erzielt wird. Dabei sind die Werte für die Bruchdehnung mit und ohne Fließnaht durchaus mit denen der anderen Zusammensetzungen vergleichbar. Der Wert ist jedoch abhängig vom Wachsanteil in der Zusammensetzung.

## Patentansprüche

1. Thermoplastische Formmasse bestehend aus
(A) 95 bis 99,9 Gew.-Teilen mindestens eines Polyoxymethylens,
(B) 0,1 bis 5 Gew.-Teilen eines oxidierten Polyethylenwachses und
(C)0 bis 50 Gew.-Teilen Zusatzstoffe, Verarbeitungshilfen, Füll-, Verstärkungs- und/oder polymerer Gleitstoffe,
wobei die Summe der Komponenten (A), (B) und (C) stets 100 Gew.-Teile ist.

2. Formmasse nach Anspruch 1, **dadurch gekennzeichnet, dass** sie aus (A) 98 bis 99,5 Gew.-Teilen der Komponente (A), (B) 0,2 bis 2,0 Gew.-Teilen der Komponente (B) und 5 bis 30 Gew.-Teilen der Komponente (C) besteht.

3. Formmasse nach Anspruch 1 oder 2, **dadurch gekennzeichnet, dass** als Thermoplast (A) ein Polyoxymethylen, das einen Schmelzindex (MVR-Wert 190/2,16) von 2 bis 50 cm³/10 min besitzt, eingesetzt wird.

4. Formmasse nach einem oder mehreren der Ansprüche 1 bis 3, **dadurch gekennzeichnet, dass** die Komponente (C) ausgewählt ist aus den Füllstoffen Kreide, Talk, Wollastonit, Glimmer, Zinkoxid und Siliciumdioxid, den Verstärkungsstoffen Glasfasern, Kohlefasern und organische Hochmodulfasern und den polymeren Gleitstoffen Polytetrafluorethylen in Pulver- oder Faserform, UHMW-Polyethylen und Pfropf-Polymerisate, erhalten aus der Pfropfreaktion von Polyethylen und Acrylnitrii/Styrol-Copolymerisat, wobei als Komponente C) einer oder mehrere dieser Bestandteile verwendet wird.

5. Formmasse nach einem oder mehreren der Ansprüche 1 bis 4, **dadurch gekennzeichnet, dass** die Komponente (B) ein hochmolekulares, polares Polyethylenwachs ist und eine Säurezahl von 12 bis 20 mg KOH/g und eine Viskosität von 3000 bis 5000 mPa • s besitzt.

6. Verwendung der Formmasse nach einem oder mehreren der Ansprüche 1 bis 5 zur Herstellung von Funktionsteilen mit engen Passungen oder geformten Gleitkörpern.

7. Verwendung der Formmasse nach Anspruch 6 in Form von Zahnrädern, Gleitlagern, Reißverschlüssen, Gleitschienen, Gleitrollen, Kurven- und Nockenscheiben.

## Claims

1. Thermoplastic moulding composition composed of
(A) from 95 to 99.9 parts by weight of at least one polyoxymethylene,
(B) from 0.1 to 5 parts by weight of an oxidized polyethylene wax and
(C) from 0 to 50 parts by weight of additives, processing aids, fillers, reinforcing materials and/or polymeric lubricants,
where the total of the parts by weight of components (A), (B) and (C) is always 100.

2. Moulding composition according to Claim 1, **characterized in that** it is composed of (A) from 98 to 99.5 parts by weight of component (A), (B) from 0.2 to 2.0 parts by weight of component (B) and (C) from 5 to 30 parts by weight of component (C).

3. Moulding composition according to Claim 1 or 2, **characterized in that** the thermoplastic (A) used is a polyoxymethylene which has a melt index (MFR 190/2.16) of from 2 to 50 cm ³/10 min.

4. Moulding composition according to one or more of Claims 1 to 3, **characterized in that** component (C) is selected from the class consisting of the fillers chalk, talc, wollastonite, mica, zinc oxide and silica, the reinforcing materials glass fibres, carbon fibres and organic high-modulus fibres and the polymeric lubricants polytetrafluoroethylene in powder or fibre form, UHMW polyethylene and graft polymers obtained from the graft reaction of polyethylene and acrylonitrile-styrene copolymer, where component (C) may be one or more of these constituents.

5. Moulding composition according to one or more of Claims 1 to 4, **characterized in that** component (B) is a high-molecular-weight polar polyethylene wax and has an acid number of from 12 to 20 mg KOH/g and a viscosity of from 3000 to 5000 mPa·s.

6. Use of the moulding composition according to one or more of Claims 1 to 5 for producing functional components which have a tight fit or moulded articles which require to slide.

7. Use of the moulding composition according to Claim 6 in the form of gearwheels, sliding bearings, zip or sliding fasteners, slide rails, casters, cams or cam wheels.

## Revendications

1. Matière à mouler thermoplastique constituée de
(A) 95 à 99,9 parties en poids d'au moins un polyoxyméthylène,
(B) 0,1 à 5 parties en poids d'une cire polyéthylène et
(C) 0 à 50 parties en poids d'additifs, adjuvants de mise en oeuvre, charges, renforts et/ou lubrifiants polymères,
la somme des composants (A), (B) et (C) étant toujours de 100 parties en poids.

2. Matière à mouler selon la revendication 1, **caractérisée en ce qu'**elle consiste en (A) 98 à 99,5 parties en poids du composant (A), (B) 0,2 à 2,0 parties en poids du composant (B) et 5 à 30 parties en poids du composant (C).

3. Matière à mouler selon la revendication 1 ou 2, **caractérisée en ce qu'**on utilise en tant que matière thermoplastique (A) un polyoxyméthylène qui présente un indice de fluidité à chaud (valeur MVR 190/2,16) de 2 à 50 cm³/10 min.

4. Matière à mouler selon une ou plusieurs des revendications 1 à 3, **caractérisée en ce que** le composant (C) est choisi parmi les charges craie, talc, wollastonite, mica, oxyde de zinc et dioxyde de silicium, les renforts fibres de carbone et fibres organiques à haut module d'élasticité et les lubrifiants polymères polytétrafluoroéthylène sous forme de poudre ou de fibres, polyéthylène UHMW (ultra-haute masse moléculaire) et polymères greffés, obtenus par la réaction de greffage de polyéthylène et d'un copolymère acrylonitrile/styrène, un ou plusieurs de ces composants étant choisi(s) en tant que composant C).

5. Matière à mouler selon une ou plusieurs des revendications 1 à 4, **caractérisée en ce que** le composant (B) est une cire polyéthylène polaire de masse moléculaire élevée et présente un indice d'acide de 12 à 20 mg de KOH/g et une viscosité de 3 000 à 5 000 mPa.s.

6. Utilisation de la matière à mouler selon une ou plusieurs des revendications 1 à 5, pour la fabrication de pièces fonctionnelles à passages étroits ou de corps moulés coulissants.

7. Utilisation de la matière à mouler selon la revendication 6, sous forme de roues dentées, de paliers à glissement, de fermetures à glissière, de rails de glissement, de roulettes, de cames et de disques de distribution.
